(19) Europäisches Patentamt
European Patent Office
Office européen des brevets

(11) **EP 2 827 143 B1**

(12) **FASCICULE DE BREVET EUROPEEN**

(45) Date de publication et mention
de la délivrance du brevet:
**01.06.2016 Bulletin 2016/22**

(51) Int Cl.:
**G01N 29/06** *(2006.01)*   **G01N 29/07** *(2006.01)*
**G01N 29/26** *(2006.01)*   **G01S 15/89** *(2006.01)*
**G01S 7/52** *(2006.01)*   **G10K 11/34** *(2006.01)*

(21) Numéro de dépôt: **14177024.8**

(22) Date de dépôt: **15.07.2014**

(54) **PROCÉDÉ ET DISPOSITIF D'IMAGERIE PAR ULTRASONS AVEC PREDICTION DES ARTEFACTS INDUITS ENTRE MODES DE RECONSTRUCTION**

ULTRASCHALLBILDGEBUNGSVERFAHREN UND -VORRICHTUNG MIT ARTEFAKTVORHERSAGE ZWISCHEN DEN WIEDERAUFBAUMODI

ULTRASONIC IMAGING METHOD AND DEVICE WITH PREDICTION OF INDUCED ARTEFACTS BETWEEN RECONSTRUCTION MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2013 FR 1357036**

(43) Date de publication de la demande:
**21.01.2015 Bulletin 2015/04**

(73) Titulaire: **Commissariat à l'Énergie Atomique et aux Énergies Alternatives 75015 Paris (FR)**

(72) Inventeurs:
 • **Bredif, Philippe**
   **75013 PARIS (FR)**
 • **Iakovleva, Ekaterina**
   **91470 LIMOURS (FR)**
 • **Chatillon, Sylvain**
   **91120 PALAISEAU (FR)**

(74) Mandataire: **Brevalex**
   **95, rue d'Amsterdam**
   **75378 Paris Cedex 8 (FR)**

(56) Documents cités:
 • **S ROBERT ET AL: "MÉTHODES ULTRASONORES DE DÉTECTION ET D'IMAGERIE TEMPS-RÉEL IMPLÉMENTÉES DANS LES SYSTÈMES D'ACQUISITION M2M - REAL-TIME ULTRASONIC TECHNIQUES IMPLEMENTED IN M2M ACQUISITION SYSTEMS", JOURNÉES COFREND "CONFÉRENCES ET EXPOSITION SUR LES ESSAIS NON DESTRUCTIFS" 2011, 24 mai 2011 (2011-05-24), XP055037304, Dunkerque (FR)**
 • **S.PAILLARD ET AL: "NEW ULTRASONIC ARRAY IMAGING OF CRACK-TYPE DEFECTS BASED ON SIMULATION-HELPED PROCESSING", 10TH EUROPEAN CONVENTION ON NON-DESTRUCTIVE TESTING 2010 (ECNDT), vol. 5, août 2010 (2010-08), pages 3670-3677, XP002724437, ISBN: 978-1-61782-791-4**
 • **J. ZHANG ET AL: "THE USE OF SCATTERING MATRIX TO MODEL MULTIMODAL ARRAY INSPECTION WITH THE TFM", REVIEW OF PROGRESS IN QUANTIPROCEEDINGS OF THE 35TH ANNUAL REVIEW OF PROGRESS IN QUANTITATIVE NONDESTRUCTIVE EVALUATION. AIP CONFERENCE PROCEEDINGS, vol. 1096, juillet 2009 (2009-07), pages 888-895, XP002724438,**
 • **E. IAKOVLEVA ET AL: "Multi-mode TFM imaging with artifacts filtering using CIVA UT forward models", AIP CONFERENCE PROCEEDINGS, vol. 1581, 18 février 2014 (2014-02-18), page 72-79, XP002724439,**

## Description

## DOMAINE TECHNIQUE

Le domaine de l'invention est celui de l'imagerie par ultrasons. L'invention s'applique en particulier au contrôle non destructif de pièces ou d'installations industrielles pour y détecter la présence d'éventuels défauts, les localiser et les dimensionner. L'invention concerne plus particulièrement un procédé d'imagerie par ultrasons utilisant un traducteur multiélément et basé sur les technique de focalisations synthétiques.

## ÉTAT DE LA TECHNIQUE ANTÉRIEURE

Dans le domaine du contrôle non destructif par ultrasons, l'une des méthodes de focalisation synthétique les plus développées, appelée "méthode de reconstruction par focalisation en tous points" (FTP), consiste en une focalisation synthétique des champs émis et reçus par sommation cohérente des données issues d'une acquisition du type *Full Matrix Capture* (FMC) ou matrice inter-éléments.

La méthode d'acquisition FMC consiste à émettre successivement par M émetteurs à ultrasons une onde ultrasonore dans la pièce à imager, et à enregistrer dans N récepteurs ultrasonores les échos provenant de la propagation des ondes émises dans la pièce. La méthode aboutit ainsi à la formation de M*N signaux élémentaires $S_{ij}(t)$ avec $1 \leq i \leq M$ et $1 \leq j \leq N$.

La méthode de reconstruction FTP consiste à sommer de façon cohérente les signaux élémentaires de manière à obtenir des maxima d'amplitude, correspondant à des interférences constructives, pour les points de la pièce où sont effectivement localisés des défauts générant des échos des ondes ultrasonores émises. La cohérence des signaux est déterminée à partir des durées de parcours théoriques des ondes ultrasonores se propageant dans la pièce entre un émetteur et un récepteur donnés et passant par le point considéré.

La méthode de reconstruction FTP comprend les étapes suivantes :

- définition d'une zone de reconstruction (positions, dimensions et nombre de points de calcul) ;
- pour chaque point P de la zone de reconstruction, et pour chaque couple émetteur-récepteur ij, calcul du temps de vol théorique, $T_{ij}(P)$ correspondant au parcours entre l'émetteur i et le récepteur j passant par le point P ;
- Pour chaque point P de la zone, sommation des amplitudes extraites des signaux $S_{ij}(t)$ aux temps $t = T_{ij}(P)$, ce qui peut s'écrire

$$I(P) = \sum_{i=1}^{M} \sum_{j=1}^{N} S_{ij}\left(T_{ij}(P)\right)..$$

La focalisation peut être réalisée en considérant plusieurs modes de reconstruction qui sont caractérisés par différents types de trajet (direct, échos de coin, échos indirects,...) et plusieurs modes de propagation des ondes (longitudinales ou transversales).

Une telle méthode est décrite dans l'article « Méthodes ultrasonores de détection et d'imagerie temps-réel implémentées dans les systèmes d'acquisition M2M », de S. Robert et al.

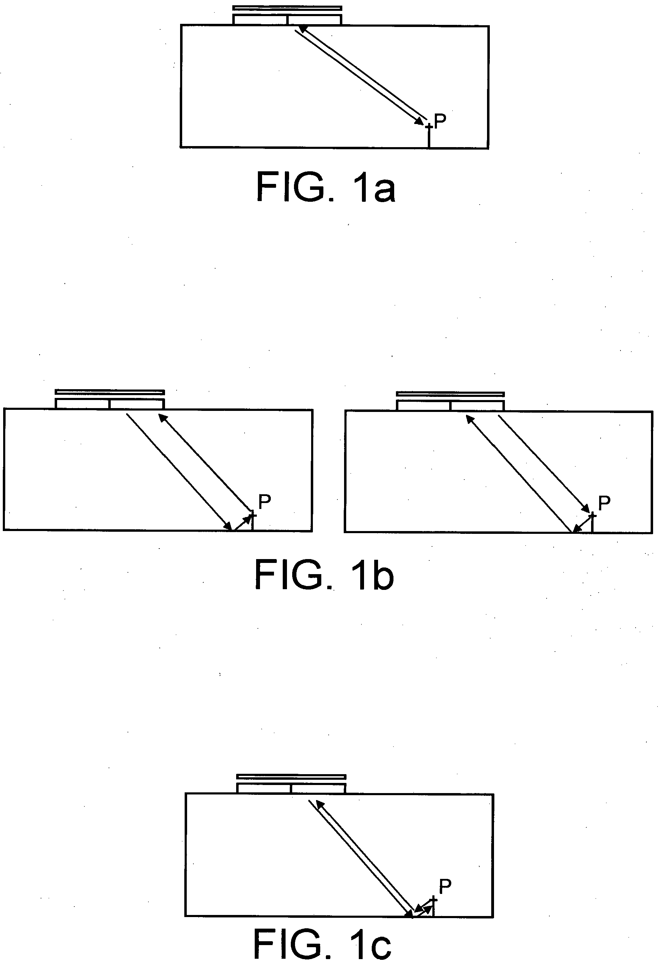

Pour un trajet de type direct, les parcours pris en compte pour le calcul des temps de vol correspondent à des trajets directs entre les différents éléments du capteur et les points de la zone de reconstruction, c'est-à-dire sans rebond sur le fond de la pièce, comme illustré sur la figure 1a.

Pour les trajets de type échos de coin et échos indirects, et comme illustré par les figures 1b et 1c, les trajets pris en compte pour le calcul des temps de vol incluent une ou plusieurs réflexions sur le fond au cours du trajet entre l'émetteur et le point de la zone de reconstruction et/ou au cours du trajet entre le point de reconstruction et le récepteur. Plus précisément, le mode écho de coin prend en considération une réflexion de l'onde ultrasonore sur le fond de la pièce, avant ou après une interaction avec le point à reconstruire, tandis que le mode écho indirect prend en compte à la fois une réflexion avant l'interaction avec le point à reconstruire et une réflexion après.

La focalisation FTP en mode écho de coin et celle en mode indirect permettent typiquement de compléter les informations fournies par la focalisation FTP en mode direct, car elles exploitent des contributions faisant intervenir d'autres phénomènes physiques et issues d'interactions avec des parties différentes de la pièce et du défaut. Elles permettent notamment d'imager d'autres parties du défaut. Par exemple, dans certains cas, la reconstruction en mode écho de coin présente l'avantage d'imager un défaut de la pièce sur toute sa longueur, et non uniquement ses extrémités.

Outre le type de trajet, un mode de reconstruction est également caractérisé par le mode de propagation du signal ultrasonore (longitudinal, transversal) sur chaque portion du trajet. On utilise conventionnellement les lettres L et T pour désigner respectivement une propagation longitudinale, respectivement transversale. Dans le cas des trajets directs, la première lettre correspond au trajet entre l'émission et le lieu de reconstruction dans la pièce, la seconde au trajet entre ce lieu et la réception. Dans le cas des trajets en écho de coin, la première lettre représente le trajet entre l'émission et le fond de pièce, la deuxième le trajet entre le fond de pièce et le lieu de reconstruction, la troisième, le trajet entre ce lieu et la réception.

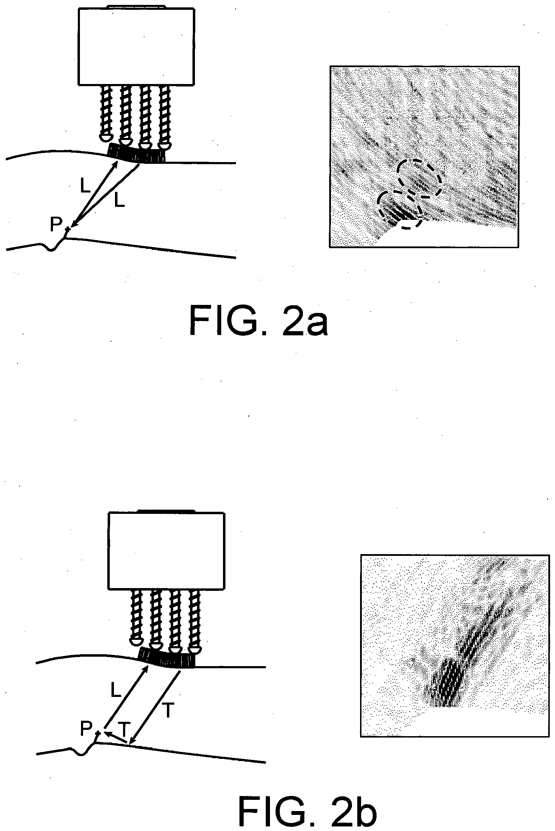

Un exemple de résultat de reconstruction par FTP à partir de données expérimentales est présenté sur les figures 2a et 2b. Ce résultat montre que l'exploitation combinée de différents modes de reconstruction présente un intérêt pour la caractérisation des défauts. En effet, dans le cas d'une reconstruction selon le mode direct LL, les deux échos de diffraction (entourés en pointillés sur l'image à droite de la figure 2a) sont correctement repositionnés aux deux extrémités, hautes et basses, de l'entaille, tandis que pour une reconstruction en mode écho de coin TTL, ce dernier est correctement repositionné sur toute la longueur de l'entaille (cf. image à droite de la figure 2b). Les deux échos de diffraction permettent alors de déterminer la hauteur du défaut et l'écho de coin permet de déterminer son orientation.

Cependant, les reconstructions FTP multi-modes réalisées sur différentes géométries ont mis en avant la présence d'indications n'ayant aucune origine physique dans le composant inspecté. L'analyse de telles indications, aussi appelées artefacts de reconstruction, montre que leur présence est due à des temps de parcours équivalents pour des modes de reconstruction différents. Les échos de défauts ou de géométrie détectés par certains modes peuvent être reconstruits pour d'autres modes dès lors qu'il y a coïncidence des temps de vols.

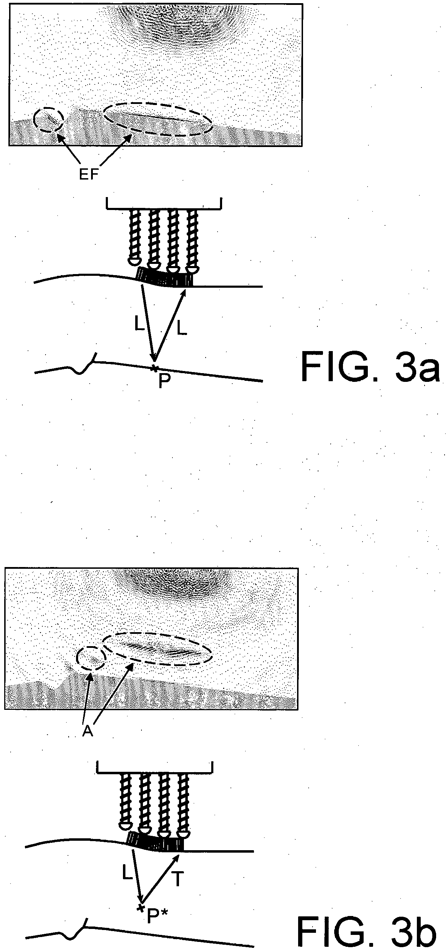

Un exemple de ce genre d'artefact provenant de l'écho de géométrie est présenté sur les figures 3a-3b. Cet exemple illustre le fait qu'une indication réellement détectée dans une reconstruction en mode direct LL engendre une contribution dans la reconstruction en mode direct LT dans les zones où les temps de vol coïncident. Pour la reconstruction obtenue en mode LL (figure 3a), l'écho de géométrie EF, correspondant à la réflexion de l'onde ultrasonore sur le fond de la pièce, est correctement repositionnée dans la pièce. Pour la reconstruction en mode LT (figure 3b), on constate la présence d'artefacts A de très forte amplitude sous l'ouverture géométrique du capteur. Ces artefacts de reconstruction proviennent du fait que, pour un couple émetteur-récepteur, pour un point de reconstruction P* suivant le mode LT, le temps de vol correspondant est identique à celui du point P (toujours pour le même couple émetteur-récepteur) reconstruit à une position différente dans la pièce suivant le mode LL. Il en résulte que l'amplitude attribuée au point P lors de la reconstruction LL est attribuée au point P* lors de la reconstruction LT. Dans cet exemple, si l'amplitude de P est lié à l'écho provenant du fond de la pièce, celle-ci sera attribuée de manière impropre au point P* induisant alors l'apparition d'un artefact dans le mode LT.

Comme le montre cet exemple, le risque de confusion entre une indication associée à un défaut et un artefact de reconstruction est non négligeable. Néanmoins, si la présence des artefacts dans les reconstructions obtenues par des techniques de focalisation synthétiques ou des techniques de focalisation conventionnelles est un fait bien connu, à ce jour, les procédures d'identification de tels artefacts sont complexes et reposent sur la connaissance de la géométrie de la pièce et du défaut. Elles sont en outre limitées à l'identification d'artefacts provenant de l'écho de géométrie.

Il existe ainsi un besoin pour des outils qui permettent d'analyser les artefacts présents dans les reconstructions par focalisation synthétique multi-modes, en permettant notamment de distinguer des échos dus à des défauts de ceux dus à la géométrie de la pièce, et de filtrer les échos indésirables, tout en restant simples à mettre en oeuvre.

## EXPOSÉ DE L'INVENTION

L'invention vise à répondre à ces besoins et propose pour ce faire, selon un premier aspect, un procédé d'imagerie par ultrasons pour imager une pièce, caractérisé par la mise en oeuvre des étapes suivantes :

- sélection d'une première sous-région de la pièce à partir d'une première image d'une région de la pièce,
- détermination, pour chaque point de la première sous-région sélectionnée, des temps de vol correspondant aux parcours selon un premier mode de reconstruction passant par le point depuis un émetteur i jusqu'à un récepteur j pour un ensemble de M*N couples émetteur-récepteur d'un signal ultrasonore;
- détermination d'une deuxième sous-région de la pièce, un point de la région appartenant à la deuxième sous-région lorsqu'un temps de vol du parcours selon un deuxième mode de reconstruction passant par le point depuis un émetteur i jusqu'à un récepteur j dudit ensemble de M*N couples émetteur-récepteur coïncide avec un temps de vol d'un parcours selon le premier mode de reconstruction depuis l'émetteur i jusqu'au récepteur j passant par l'un des points de la première sous-région sélectionnée.

Certains aspects préférés mais non limitatifs de ce procédé sont les suivants :

- il comprend une reconstruction d'une deuxième image de la région de la pièce par une focalisation synthétique suivant le deuxième mode de reconstruction selon laquelle, pour chaque point de la région, et pour chaque couple émetteur-récepteur i-j, on exploite un signal ultrasonore considéré à un temps de vol du parcours selon le deuxième mode de reconstruction depuis l'émetteur i jusqu'au récepteur j en passant par le point de la région, uniquement si ledit temps de vol selon le deuxième mode de reconstruction coïncide avec un temps de vol d'un parcours selon le premier mode de reconstruction depuis l'émetteur i jusqu'au récepteur j passant par l'un des points de la première sous-région sélectionnée ;
- il comprend une reconstruction d'une deuxième image de la région de la pièce par une focalisation synthétique suivant le deuxième mode de reconstruction selon laquelle, pour chaque point de la région, et pour chaque couple émetteur-récepteur i-j, on exploite un signal ultrasonore considéré à un temps de vol du parcours selon le deuxième mode de reconstruction depuis l'émetteur i jusqu'au récepteur j en passant par le point de la région, uniquement si ledit temps de vol selon le deuxième mode de reconstruction diffère des temps de vol des parcours selon le premier mode de reconstruction depuis l'émetteur i jusqu'au récepteur j passant par les points de la première sous-région sélectionnée.

- un mode de reconstruction est caractérisé par un type de trajet comportant plusieurs portions et un mode de propagation du signal ultrasonore sur chaque portion du trajet ;
- le premier mode de reconstruction est un mode selon lequel chaque signal ultrasonore suit un trajet direct à deux portions, le mode de propagation du signal étant latéral sur chacune des portions ;
- le deuxième mode de reconstruction est un mode selon lequel chaque signal ultrasonore suit un trajet direct à deux portions et le mode de propagation du signal est différent sur chacune des portions, ou un mode selon lequel chaque signal ultrasonore suit un trajet indirect à trois portions au moins.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outres les figures 1a-1c, 2a-2b et 3a-3b déjà discutées ci-dessus :

- les figures 4a et 4b illustrent un premier mode de reconstruction de type direct LL et un deuxième mode de reconstruction de type direct LT;
- la figure 5 illustre différentes indications présentes dans l'image d'une pièce reconstruite par un premier mode de reconstruction de type direct LL ;
- les figures 6a-6c illustrent l'application d'un procédé conforme à l'invention avec un premier mode de reconstruction de type direct LL et un deuxième mode de reconstruction de type direct LT ;
- les figures 7a-7c illustrent le filtrage des artefacts dans une reconstruction selon un mode de type direct LT;
- les figures 8a-8c et 9a-9c illustrent l'application d'un procédé conforme à l'invention avec un premier mode de reconstruction de type direct LL et un deuxième mode de reconstruction de type écho de coin LLL, avec sélection de deux régions différentes dans une image reconstruite en considérant un premier mode de reconstruction de type direct LL;
- les figures 10a-10d illustrent le filtrage des artefacts dans une reconstruction selon un mode de type écho de coin LLL.

## EXPOSÉ DÉTAILLÉ DE MODES DE RÉALISATION PARTICULIERS

L'invention porte sur un procédé d'imagerie par ultrasons pour imager une pièce, mettant en oeuvre une reconstruction par focalisation synthétique, par exemple une focalisation en tous points.

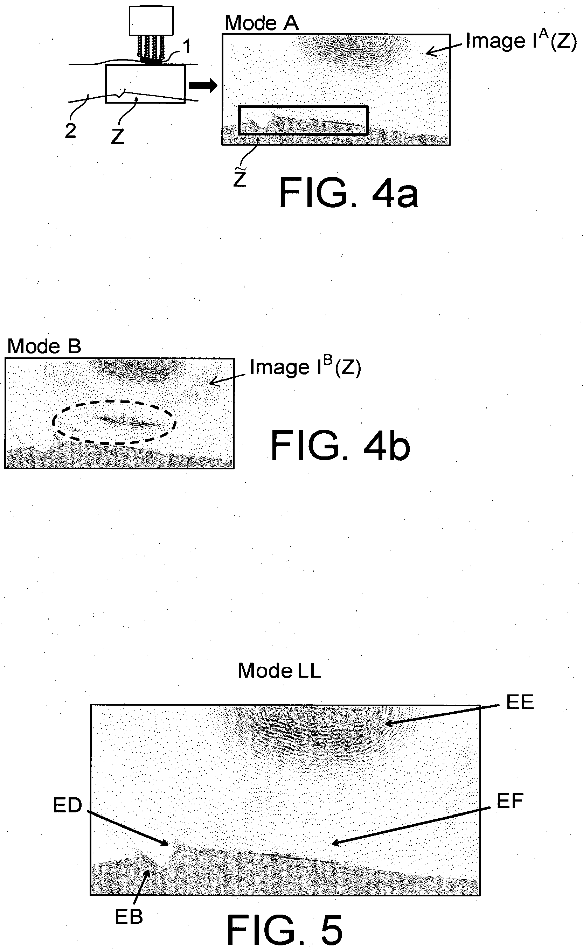

En référence à la figure 4a, le procédé exploite un traducteur multiélément 1 disposé sur la surface d'une pièce 2 à imager, comportant M émetteurs d'un signal ultrasonore, indicés i, et N récepteurs d'un signal ultrasonore, indicés j, fournissant des signaux $S_{ij}(t)$ représentatifs de l'écho de l'onde ultrasonore reçu pour une émission par un émetteur i et une réception par un récepteur j.

Toujours en référence à la figure 4a, le procédé comporte une première étape de sélection d'une première sous-région $\check{Z}$ de la pièce 2 à partir d'une première image $I^A(Z)$ d'une région $Z(\check{Z} \subset Z)$ de la pièce 2.

Cette sélection peut être réalisée manuellement par un opérateur qui visualise et sélectionne une sous-région qui contient un écho dont l'origine est identifiable (écho de fond de pièce, ou écho de défaut par exemple). En variante, la sélection de la sous-région peut être automatisée, par exemple au moyen d'outils d'analyse automatique d'images aptes à dessiner les contours de sous-régions présentant les plus fortes amplitudes (typiquement par seuillage de l'image et conservation des points dont les amplitudes sont supérieures au seuil).

Le procédé comporte ensuite une étape de détermination, pour chaque point P de la première sous-région sélectionnée $\check{Z}$, des temps de vol des parcours selon un premier mode de reconstruction passant par le point P depuis un émetteur i jusqu'à un récepteur j pour l'ensemble de M*N couples émetteur-récepteur. En d'autres termes, on vient extraire les temps de vol selon le premier mode de reconstruction associés à chaque point de la sous-région sélectionné pour un mode de reconstruction donné. On forme alors, pour chacun des M*N couples émetteur-récepteur, un sous-ensemble de temps de vol $T_{ij}^A(\check{Z})$ comprenant l'ensemble des temps de vol selon le premier mode de reconstruction (mode A) depuis l'émetteur i jusqu'à un récepteur j passant par l'un des points de la sous-région sélectionnée $\check{Z}$.

Dans un mode de réalisation possible de l'invention, le procédé comporte une étape de reconstruction de ladite première image $I^A(Z)$ de la région Z par une focalisation synthétique suivant le premier mode de reconstruction d'ondes ultrasonores (mode A) exploitant, pour chaque point P de la région, les M*N signaux ultrasonores $S_{ij}(t)$ considérés, pour chaque couple émetteur-récepteur i-j, à un temps de vol $T_{ij}^A(P)$ correspondant au parcours selon ledit premier mode de reconstruction depuis l'émetteur jusqu'au récepteur j en passant par le point P de la région. L'ensemble de ces temps de vol, calculés pour tous les couples émetteur-récepteur i-j et

de coin LLL.

pour tous les points P de la région reconstruite Z, est

dénoté $\mathbf{T}^{A}(\mathbf{Z}) = \left\{T_{ij}^{A}(\mathbf{Z})\right\}_{i=1,...,M,\,j=1,...N}$ . Dans le cadre de ce mode de réalisation les différents sous-ensembles de temps de vol $T_{ij}^{A}(\breve{Z})$ sont alors connus de la reconstruction de la première image suivant le premier mode A.

Le procédé comporte par ailleurs une étape de détermination d'une deuxième sous-région de la pièce, un point P de la région Z appartenant à la deuxième sous-région lorsqu'un temps de vol $T_{ij}^{B}(P)$ du parcours selon un deuxième mode de reconstruction (mode B) passant par le point P depuis un émetteur i jusqu'à un récepteur j dudit ensemble de M*N couples émetteur-récepteur coïncide avec un temps de vol d'un parcours selon le premier mode de reconstruction passant par l'un des points de la première sous-région sélectionnée $\breve{Z}$ depuis

l'émetteur i jusqu'au récepteur j $(T_{ij}^{B}(P) \in \mathbf{T}_{ij}^{A}(\breve{Z}))$.

A titre d'exemple, les échos présents dans la sous-région sélectionnée $\breve{Z}$ de la figure 4a induisent des artefacts dans une image reconstruite selon le mode B dans la zone entourée en pointillé sur la figure 4b qui comprend les points pour lesquels le temps de vol en mode B correspond à un temps de vol en mode A passant par un point de la sous-région sélectionnée $\breve{Z}$. On comprend donc que l'invention réalise une transformation en mode B de la sous-région sélectionnée $\breve{Z}$.

Dans un mode de réalisation possible de l'invention, le procédé comporte par ailleurs une étape de reconstruction d'une deuxième image $I^{B}(Z)$ de la région Z de la pièce par une focalisation synthétique suivant le deuxième mode de reconstruction (mode B). Mais à la différence d'une reconstruction conventionnelle exploitant l'ensemble des temps de vol pour tous les couples émetteur-récepteur et tous les points de la région, la reconstruction de la deuxième image selon l'invention met un oeuvre une isolation, ou a contrario un filtrage, d'artefacts de reconstruction.

Le procédé peut ainsi comprendre une reconstruction d'une deuxième image $I^{B}(Z)$ de la région Z de la pièce suivant le deuxième mode de reconstruction (mode B) exploitant, pour chaque point P de la région Z, et pour chaque couple émetteur-récepteur i-j, un signal ultrasonore $S_{ij}(t)$ considéré à un temps de vol $T_{ij}^{B}(P)$ du parcours selon le deuxième mode de reconstruction depuis l'émetteur i jusqu'au récepteur j en passant par le point P de la région, uniquement si ledit temps de vol $T_{ij}^{B}(P)$ coïncide (isolation d'artefacts), respectivement diffère (filtrage d'artefacts), avec un temps de vol d'un parcours selon le premier mode de reconstruction passant par l'un des points de la sous-région sélectionnée depuis l'émetteur i jusqu'au récepteur j.

En d'autres termes, la reconstruction de la deuxième image suivant le mode B exploite, lors d'une isolation d'artefacts, et pour un couple émetteur-récepteur i-j donné, uniquement les temps de vol préalablement extraits formant le sous-ensemble $T_{ij}^{A}(\breve{Z})$. A contrario, la reconstruction de la deuxième image suivant le mode B exploite, lors d'un filtrage d'artefacts, et pour un couple émetteur-récepteur i-j donné, uniquement les temps de vol n'appartement pas au sous-ensemble préalablement extrait $T_{ij}^{A}(\breve{Z})$.

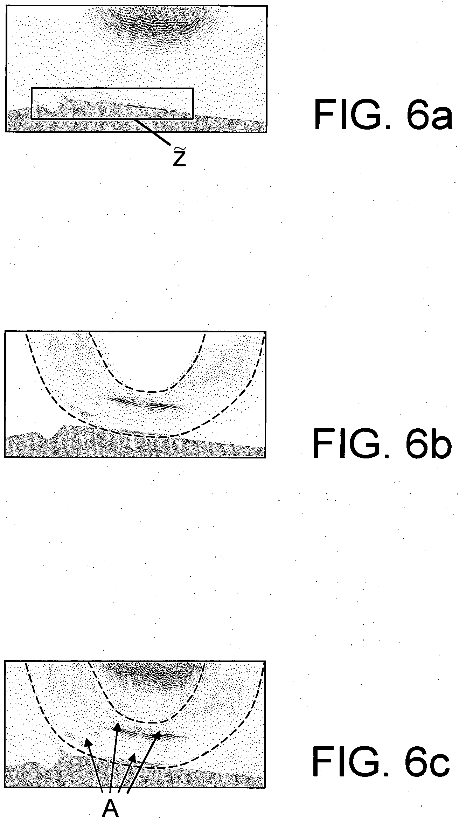

Dans le cas d'une isolation, les indications présentes dans la sous-région sélectionnée $\breve{Z}$ à partir de la première image $I^{A}(Z)$ ont la même origine que celles présentes dans la reconstruction de la deuxième image. Dans l'exemple des figures 6a et 6b, il est alors possible de déduire que les indications liées à l'écho de fond de pièce et à l'écho de défaut détecté (zone $\breve{Z}$) suivant le premier mode A induisent les artefacts entourées en pointillé dans la deuxième image $I^{B}(Z)$.

Pour réaliser l'isolation d'artefacts de reconstruction dans la deuxième image, on détermine, pour chaque point P de la région Z, une somme d'amplitudes des signaux acoustiques limitée aux signaux acoustiques reçus à un récepteur j depuis un émetteur i lorsque le temps de vol $T_{ij}^{B}(P)$ du parcours selon le deuxième mode de reconstruction depuis l'émetteur i jusqu'au récepteur j en passant par le point P coïncide avec un temps de vol d'un parcours selon le premier mode de reconstruction depuis l'émetteur i jusqu'au récepteur j en passant par l'un des points de la sous-région sélectionnée

$(T_{ij}^{B}(P) \in \mathbf{T}_{ij}^{A}(\breve{Z}))$.

Ainsi, lors de la reconstruction suivant le mode B, on ne considère que les contributions $S_{ij}(T_{ij}B(P))$ des points pour lesquels les temps de vols coïncident en mode B avec ceux de la sous-région sélectionnée dans le mode A.

Pour l'isolation, la somme d'amplitudes des signaux acoustiques déterminées en chaque point P peut ainsi s'exprimer selon $I^{B}(P) = \sum_{i=1}^{M}\sum_{j=1}^{N} A_{ij}^{B}(P),$ où

l'amplitude $A_{ij}^{B}(P)$ est donnée par

$$A_{ij}^{B}(P) = \begin{cases} S_{ij}\left(T_{ij}^{B}(P)\right) & \text{si} \quad T_{ij}^{B}(P) \in \mathbf{T}_{ij}^{A}(\breve{Z}) \\ 0 & \sin on \end{cases}.$$

Pour réaliser le filtrage d'artefacts de reconstruction dans la deuxième image, on détermine, pour chaque point P de la région Z, une somme d'amplitudes des signaux acoustiques limitée aux signaux acoustiques reçus à un récepteur j depuis un émetteur i lorsque le temps de vol $T_{ij}^{B}(P)$ du parcours selon le deuxième mode de reconstruction depuis l'émetteur i jusqu'au récepteur j en passant par le point P ne coïncide pas avec les temps de vol des parcours selon le premier mode de reconstruction depuis l'émetteur i jusqu'au récepteur j en passant par les points de la sous-région sélectionnée

$$\left(T_{ij}^{B}(P) \notin \mathbf{T}_{ij}^{A}(\tilde{\mathbf{Z}})\right).$$

Ainsi, lors de la reconstruction suivant le mode B, on ne considère pas les contributions $S_{ij}(T_{ij}B(P))$ des points pour lesquels les temps de vols coïncident en mode B avec ceux de la sous-région sélectionnée dans le mode A.

Pour le filtrage, la somme d'amplitudes des signaux acoustiques déterminées en chaque point P peut ainsi s'exprimer selon $I^{B}(P) = \sum_{i=1}^{M}\sum_{j=1}^{N} A_{ij}^{B}(P)$, où l'amplitude $A_{ij}^{B}(P)$ est donnée par

$$A_{ij}^{B}(P) = \begin{cases} 0 & \text{si } T_{ij}^{B}(P) \in \mathbf{T}_{ij}^{A}(\tilde{\mathbf{Z}}) \\ S_{ij}\left(T_{ij}^{B}(P)\right) & \text{sin } on \end{cases}$$

Compte tenu de la différence de célérité existant entre les ondes L et T, l'analyse des images est préférentiellement réalisée en considérant tout d'abord les modes de propagation les plus rapides (direct LL par exemple) puis les plus lents (direct LT et écho de coin LLL par exemple). En effet, dans le cas du mode direct LL, les risques de présence d'artefacts de reconstruction provenant d'un mode de propagation plus lent sont réduits. En particulier, pour la sous-région considérée, ce mode ne pourra pas contenir d'indication liée à un écho de géométrie détecté suivant les modes direct LT ou écho de coin LLL, ce qui rend la nature des indications observables plus facilement interprétable. La figure 5 donne à cet égard un exemple d'image reconstruite selon le mode direct LL sur laquelle on observe la présence d'un écho de fond de pièce EF à l'aplomb du traducteur, d'un écho de géométrie EB lié au bourrelet de soudure, d'indications liées à l'écho d'émission EE et un écho ED lié à l'entaille débouchante.

Le procédé précédemment décrit peut être appliquée sur ces différentes indications afin de prédire les artefacts qui leur seront associés dans d'autres modes de reconstruction.

Les figures 6a-6c donnent un exemple de mise en oeuvre du procédé lors d'une isolation d'artefacts dans une reconstruction selon le mode direct LT. La figure 6a est une image reconstruite selon le mode LL (mode A) dans laquelle des échos sont observables dans la sous-région sélectionnée Ž. Ces échos induisent des artefacts dans une image reconstruite selon le mode LT (mode B) dans la zone entourée en pointillés sur la figure 6b qui comprend les points pour lesquels le temps de vol du parcours en mode LT correspond à un temps de vol du parcours en mode LL passant par un point de la sous-région sélectionnée Ž (transformation en mode B de la sous-région Ž). La figure 6c illustre une reconstruction en mode LT standard. La comparaison des figures 6b et 6c permet alors d'interpréter la nature d'un grand nombre d'indications, en particulier la présence d'artefacts A.

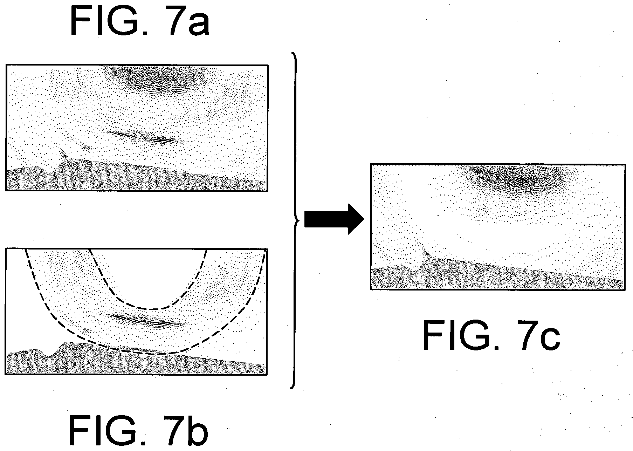

Les figures 7a-7c illustrent quant à elle un exemple de mise en oeuvre du procédé lors d'un filtrage d'artefacts dans une reconstruction selon le mode LT. La figure 7a correspond à la figure 6c et illustre une reconstruction en mode LT standard. La figure 7b correspond à la figure 6b et illustre une transformation en mode B de la sous-région sélectionnée Ž. La figure 7c illustre quant à elle le résultat du filtrage conforme à l'invention, où la deuxième image de la région est débarrassée des artefacts A de la figure 6c induits par les échos observés dans la sous-région Ž de la première image.

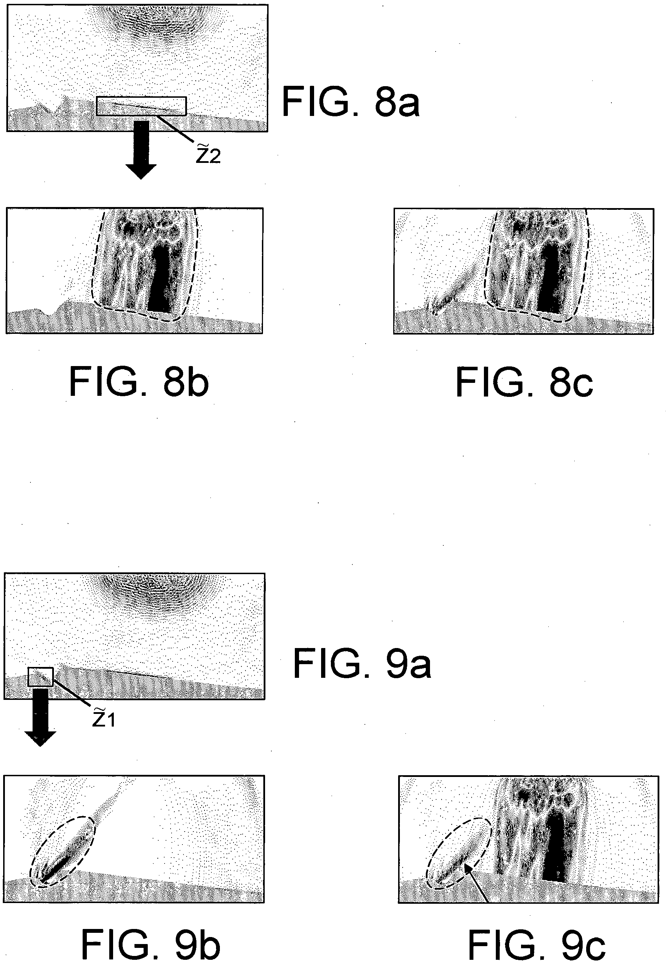

Les figures 8a-8c, respectivement 9a-9c, donnent un exemple de mise en oeuvre du procédé lors d'une isolation d'artefacts dans une reconstruction selon le mode écho de coin LLL. La figure 8a, respectivement 9a, est une image reconstruite selon le mode direct LL (mode A) dans laquelle des échos sont observables dans une sous-région sélectionnée Ž 1, respectivement Ž 2. Ces échos induisent des artefacts dans une image reconstruite selon le mode LLL (mode B) dans la zone entourée en pointillés sur la figure 8b, respectivement 9b, qui correspond à la transformation en mode B de la sous-région Ž. La figure 8c, respectivement 9c, illustre une reconstruction en mode LLL standard. La comparaison des figures 8b et 8c, respectivement 9b et 9c, permet alors d'interpréter la nature d'un grand nombre d'indications, en particulier la présence d'artefacts.

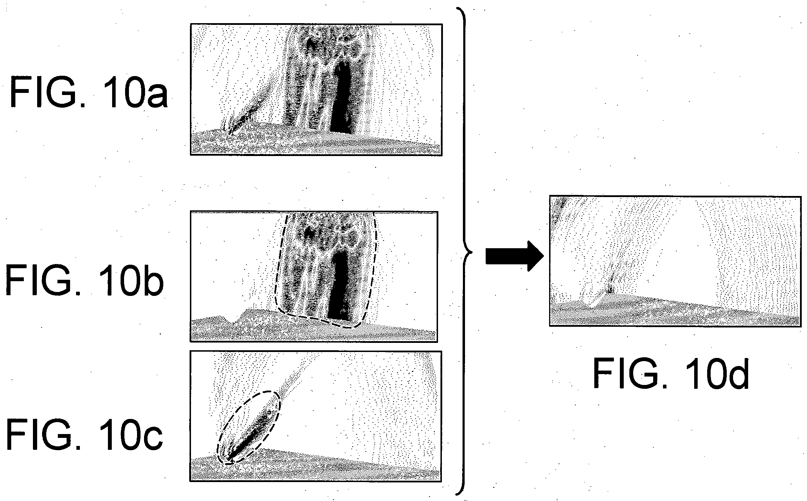

Les figures 10a-10d illustrent quant à elles un exemple de mise en oeuvre du procédé lors d'un filtrage d'artefacts dans une reconstruction selon le mode LLL. La figure 10a correspond aux figures 8c et 9c et illustre une reconstruction en mode LLL standard. La figure 10b correspond à la figure 8b et illustre transformation en mode B de la sous-région Z 2. La figure 10c correspond à la figure 9b et illustre transformation en mode B de la sous-région Ž1. La figure 10d illustre quant à elle le résultat du filtrage conforme à l'invention, où la deuxième image de la région est débarrassée des artefacts induits par les échos observés dans les sous-régions Ž 1 et Ž 2 de la première image.

L'invention n'est pas limitée au procédé précédemment décrit, mais s'étend également à un dispositif d'imagerie par ultrasons pour imager une pièce 1 apte à mettre en oeuvre ce procédé, notamment un dispositif comprenant M émetteurs d'un signal ultrasonore dans la pièce à imager 1 et N récepteurs d'un signal ultrasonores $S_{ij}(t)$ provenant de la pièce à imager, l'indice i désignant l'un des émetteurs, l'indice j désignant l'un des récepteurs, et t représentant le temps, caractérisé en ce qu'il comporte des moyens de traitement configurés pour :

- sélectionner une première sous-région de la pièce à partir d'une première image d'une région de la pièce 1,
- déterminer, pour chaque point P de la première sous-région sélectionnée, des temps de vol des parcours selon un premier mode de reconstruction passant par le point P depuis un émetteur i jusqu'à un récepteur j pour un ensemble de M*N couples émetteur-récepteur d'un signal ultrasonore;

- déterminer une deuxième sous-région de la pièce, un point P* de la région appartenant à la deuxième sous-région lorsqu'un temps de vol du parcours selon un deuxième mode de reconstruction passant par le point P* depuis un émetteur i jusqu'à un récepteur j dudit ensemble de M*N couples émetteur-récepteur coïncide avec un temps de vol d'un parcours selon le premier mode de reconstruction depuis l'émetteur i jusqu'au récepteur j passant par l'un des points de la première sous-région sélectionnée.

Et l'invention s'étend également à un produit programme d'ordinateur comprenant des instructions de code pour l'exécution des étapes du procédé précédemment décrit, lorsque ledit programme est exécuté sur un ordinateur.

On aura compris de la présente description que l'invention permet d'analyser l'origine d'indications présentes dans des reconstructions par focalisation synthétique multimodale et ainsi de distinguer des échos dus à des défauts de ceux dus à la géométrie de la pièce. L'invention présente en outre l'avantage de s'appliquer à toutes les reconstructions multimodales. Elle utilise en outre les mêmes paramètres qu'une focalisation synthétique standard, et donc, ne nécessite pas de calculs ou de mesures supplémentaires. Elle peut de plus être utilisée non seulement pour une identification des artefacts, que pour un filtrage de ces derniers.

**Revendications**

1. Procédé d'imagerie par ultrasons pour imager une pièce (1), **caractérisé par** la mise en oeuvre des étapes suivantes :

   - sélection d'une première sous-région (Ž) de la pièce à partir d'une première image ($I^A(Z)$) d'une région (Z) de la pièce (1),
   - détermination, pour chaque point de la première sous-région sélectionnée (Ž), des temps de vol ($T_{ij}{}^A(\check{Z})$) correspondant aux parcours selon un premier mode de reconstruction (A) passant par le point depuis un émetteur i jusqu'à un récepteur j pour un ensemble de M*N couples émetteur-récepteur d'un signal ultrasonore;
   - détermination d'une deuxième sous-région de la pièce, un point (P) de la région (Z) appartenant à la deuxième sous-région lorsqu'un temps de vol ($T_{ij}{}^B(P)$) du parcours selon un deuxième mode de reconstruction (B) passant par le point (P) depuis un émetteur i jusqu'à un récepteur j dudit ensemble de M*N couples émetteur-récepteur coïncide avec un temps de vol ($T^A(\check{Z})$) d'un parcours selon le premier mode de reconstruction depuis l'émetteur i jusqu'au récepteur j passant par l'un des points de la première sous-région sélectionnée.

2. Procédé selon la revendication 1, comprenant une reconstruction d'une deuxième image ($I^B(Z)$) de la région de la pièce par une focalisation synthétique suivant le deuxième mode de reconstruction selon laquelle, pour chaque point (P) de la région, et pour chaque couple émetteur-récepteur i-j, on exploite un signal ultrasonore $S_{ij}(t)$ considéré à un temps de vol ($T_{ij}B(P)$) du parcours selon le deuxième mode de reconstruction depuis l'émetteur i jusqu'au récepteur j en passant par le point (P) de la région, uniquement si ledit temps de vol selon le deuxième mode de reconstruction coïncide avec un temps de vol d'un parcours selon le premier mode de reconstruction depuis l'émetteur i jusqu'au récepteur j passant par l'un des points de la première sous-région sélectionnée.

3. Procédé selon la revendication 2, dans lequel la reconstruction de la deuxième image ($I^B(Z)$) comprend, pour chaque point (P) de la région, la détermination d'une somme d'amplitudes de signaux acoustiques limitée aux signaux acoustiques reçus à un récepteur j depuis un émetteur i lorsque le temps de vol du parcours selon le deuxième mode de reconstruction depuis l'émetteur i jusqu'au récepteur j en passant par le point (P) coïncide avec un temps de vol d'un parcours selon le premier mode de reconstruction depuis l'émetteur i jusqu'au récepteur j en passant par l'un des points de la première sous-région sélectionnée.

4. Procédé selon la revendication 1, comprenant une reconstruction d'une deuxième image ($I^B(Z)$) de la région de la pièce par une focalisation synthétique suivant le deuxième mode de reconstruction selon laquelle, pour chaque point (P) de la région, et pour chaque couple émetteur-récepteur i-j, on exploite un signal ultrasonore $S_{ij}(t)$ considéré à un temps de vol ($T_{ij}{}^B(P)$) du parcours selon le deuxième mode de reconstruction depuis l'émetteur i jusqu'au récepteur j en passant par le point de la région, uniquement si ledit temps de vol selon le deuxième mode de reconstruction diffère des temps de vol des parcours selon le premier mode de reconstruction depuis l'émetteur i jusqu'au récepteur j passant par les points de la première sous-région sélectionnée.

5. Procédé selon la revendication 4, dans lequel la reconstruction de la deuxième image ($I^B(Z)$) comprend, pour chaque point de la région, la détermination d'une somme d'amplitudes des signaux acoustiques limitée aux signaux acoustiques reçus à un récepteur j depuis un émetteur i lorsque le temps de vol du parcours selon le deuxième mode de reconstruction depuis l'émetteur i jusqu'au récepteur j en passant par le point ne coïncide pas avec l'un des temps de vol des parcours selon le premier mode de reconstruction depuis l'émetteur i jusqu'au récepteur j en passant par les points de la première sous-région sélectionnée.

6. Procédé selon l'une des revendications 1 à 5, dans lequel un mode de reconstruction est **caractérisé par** un type de trajet comportant plusieurs portions et un mode de propagation du signal ultrasonore sur chaque portion du trajet.

7. Procédé selon la revendication 6, dans lequel le premier mode de reconstruction est un mode selon lequel chaque signal ultrasonore suit un trajet direct à deux portions, le mode de propagation du signal étant latéral sur chacune des portions.

8. Procédé selon la revendication 7, dans lequel le deuxième mode de reconstruction est un mode selon lequel chaque signal ultrasonore suit un trajet direct à deux portions et le mode de propagation du signal est différent sur chacune des portions, ou un mode selon lequel chaque signal ultrasonore suit un trajet indirect à trois portions au moins.

9. Dispositif d'imagerie par ultrasons pour imager une pièce (1) mettant en oeuvre une reconstruction par focalisation synthétique, comprenant M émetteurs d'un signal ultrasonore dans la pièce à imager (1) et N récepteurs d'un signal ultrasonores $S_{ij}(t)$ provenant de la pièce à imager, l'indice i désignant l'un des émetteurs, l'indice j désignant l'un des récepteurs, et t représentant le temps, **caractérisé en ce qu'**il comporte des moyens de traitement configurés pour :

- sélectionner une première sous-région de la pièce à partir d'une première image d'une région de la pièce (1),
- déterminer, pour chaque point de la première sous-région sélectionnée, des temps de vol correspondant aux parcours selon un premier mode de reconstruction passant par le point depuis un émetteur i jusqu'à un récepteur j pour un ensemble de M*N couples émetteur-récepteur d'un signal ultrasonore;
- déterminer une deuxième sous-région de la pièce, un point (P) de la région (Z) appartenant à la deuxième sous-région lorsqu'un temps de vol du parcours selon un deuxième mode de reconstruction passant par le point depuis (P) un émetteur i jusqu'à un récepteur j dudit ensemble de M*N couples émetteur-récepteur coïncide avec un temps de vol d'un parcours selon le premier mode de reconstruction depuis l'émetteur i jusqu'au récepteur j passant par l'un des points de la première sous-région sélectionnée.

10. Produit programme d'ordinateur comprenant des instructions de code pour l'exécution des étapes du procédé selon l'une quelconque des revendications 1 à 8 lorsque ledit programme est exécuté sur un ordinateur.

**Patentansprüche**

1. Ultraschall-Bildgebungsverfahren zum Abbilden eines Elements (1), **dadurch gekennzeichnet, dass** ein Durchführen der folgenden Schritte umfasst:

- Auswählen einer ersten Unter-Region (Ž) des Elements ausgehend von einem ersten Bild ($I^A(Z)$) iner Region (Z) des Elements (1),
- Bestimmen von Flugzeiten ($T_{ij}^A(Ž)$) für jeden Punkt der ausgewählten ersten Unter-Region (Ž), entsprechend Wegen gemäß einem ersten Rekonstruktionsmodus (A), welche durch den Punkt von einem Sender i bis zu einem Empfänger j verlaufen, für eine Menge von M*N Sender-Empfänger-Paaren eines Ultraschallsignals;
- Bestimmen einer zweiten Unter-Region des Elements, wobei ein Punkt (P) des Bereichs (Z) in der zweiten Unter-Region erscheint, wenn eine Flugzeit ($T^B_{ij}(P)$)des Weges gemäß einem zweiten Rekonstruktionsmodus (B), welcher durch den Punkt (P) von einem Sender i zu einem Empfänger j der Menge von M*N Sender-Empfänger-Paaren verläuft, mit einer Flugzeit ($T^A(Ž)$) eines Weges gemäß dem ersten Rekonstruktionsmodus von dem Sender i zu dem Empfänger j durch einen der Punkte der ausgewählten ersten Unter-Region zusammenfällt.

2. Verfahren nach Anspruch 1, umfassend eine Rekonstruktion eines zweiten Bildes ($I^B(Z)$) der Region des Elements durch eine synthetische Fokussierung gemäß dem zweiten Rekonstruktionsmodus, gemäß welcher für jeden Punkt (P) der Region und für jedes Sender-Empfänger-Paar i-j ein Ultraschallsignal $S_{ij}(t)$ verwendet wird, betrachtet zu einer Flugzeit ($T^B_{ij}(P)$) des Weges gemäß dem zweiten Rekonstruktionsmodus von dem Sender i zu dem Empfänger j durch den Punkt (P) der Region verlaufend, lediglich wenn die Flugzeit gemäß dem zweiten Rekonstruktionsmodus mit einer Flugzeit eines Weges gemäß dem ersten Rekonstruktionsmodus von dem Sender i zu dem Empfänger j durch den einen der Punkte der ausgewählten ersten Unter-Region verlaufend zusammenfällt.

3. Verfahren nach Anspruch 2, wobei die Rekonstruktion des zweiten Bildes ($I^B(Z)$) für jeden Punkt (P) der Region das Bestimmen einer Summe von Amplituden von akustischen Signalen umfasst, welche auf akustische Signale beschränkt sind, welche von einem Empfänger j ausgehend von einem Sender i empfangen werden, wenn die Flugzeit des Weges gemäß dem zweiten Rekonstruktionsmodus von dem Sender i zu dem Empfänger j durch den Punkt (P) verlaufend mit einer Flugzeit eines Weges gemäß dem ersten Rekonstruktionsmodus von dem Sender i zu dem Empfänger j durch einen der Punkte der auswählten ersten Unter-Region verlaufend zusammenfällt.

4. Verfahren nach Anspruch 1, umfassend eine Rekonstruktion eines zweiten Bildes ($I^B(Z)$) der Region des Elements durch eine synthetische Fokussierung gemäß dem zweiten Rekonstruktionsmodus, gemäß welcher für jeden Punkt (P) der Region und für jedes Sender-Empfänger-Paar i-j ein Ultraschallsignal $S_{ij}(t)$ verwendet wird, betrachtet zu einer Flugzeit ($T^B_{ij}(P)$) des Weges gemäß dem zweiten Rekonstruktionsmodus von dem Sender i zu dem Empfänger j durch den Punkt der Region verlaufend, lediglich wenn die Flugzeit gemäß dem zweiten Rekonstruktionsmodus sich von den Flugzeiten der Wege gemäß dem ersten Rekonstruktionsmodus von dem Sender i zu dem Empfänger j durch die Punkte der ausgewählten ersten Unter-Region verlaufend unterscheidet.

5. Verfahren nach Anspruch 4, wobei die Rekonstruktion des zweiten Bildes ($I^B(Z)$) für jeden Punkt der Region das Bestimmen einer Summe von Amplituden von akustischen Signalen umfasst, welche auf akustische Signale beschränkt sind, welche von einem Empfänger j ausgehend von einem Sender i empfangen werden, wenn die Flugzeit des Weges gemäß dem zweiten Rekonstruktionsmodus von dem Sender i zu dem Empfänger j durch den Punkt verlaufend nicht mit einer der Flugzeiten von Wegen gemäß dem ersten Rekonstruktionsmodus von dem Sender i zu dem Empfänger j durch die Punkte der auswählten ersten Unter-Region verlaufend zusammenfällt.

6. Verfahren nach einem der Ansprüche 1 bis 5, wobei ein Rekonstruktionsmodus durch einen Typ von Bahnkurve gekennzeichnet ist, welche mehrere Abschnitte und einen Propagationsmodus des Ultraschallsignals auf jedem Abschnitt der Bahnkurve umfasst.

7. Verfahren nach Anspruch 6, wobei der erste Rekonstruktionsmodus ein Modus ist, gemäß welchem jedes Ultraschallsignal einer direkten Bahnkurve mit zwei Abschnitten folgt, wobei der Propagationsmodus des Signals auf jedem der Abschnitte lateral ist.

8. Verfahren nach Anspruch 7, wobei der zweite Rekonstruktionsmodus ein Modus ist, gemäß welchem jedes Ultraschallsignal einer direkten Bahnkurve mit zwei Abschnitten folgt und der Propagationsmodus des Signals auf jedem der Abschnitte unterschiedlich ist, oder ein Modus, gemäß welchem jedes Ultraschallsignal einer indirekten Bahnkurve mit wenigstens drei Abschnitten folgt.

9. Ultraschall-Bildgebungsvorrichtung zum Abbilden eines Elements (1) durch Durchführen einer Rekonstruktion durch synthetische Fokussierung, umfassend M Sender für ein Ultraschallsignal in das abzubildende Element (1) und N Empfänger für ein Ultraschallsignal $S_{ij}(t)$, welches aus dem abzubildenden Element kommt, wobei der Index i einen der Sender bezeichnet, der Index j einen der Empfänger bezeichnet, und t die Zeit bezeichnet, **dadurch gekennzeichnet, dass** es Behandlungsmittel umfasst, welche dazu eingerichtet sind:

- eine erste Unter-Region des Elements ausgehend von einem ersten Bild einer Region des Elements (1) auszuwählen,
- für jeden Punkt der ausgewählten ersten Unter-Region Flugzeiten zu bestimmen, welche einem Weg gemäß einem ersten Rekonstruktionsmodus entsprechen, welche durch den Punkt von einem Sender i zu einem Empfänger j verlaufen, für eine Menge von M*N Sender-Empfänger-Paaren eines Ultraschallsignals;
- eine zweite Unter-Region des Elements zu bestimmen, wobei ein Punkt (P) der Region (Z) in der zweiten Unter-Region erscheint, wenn eine Flugzeit des Weges gemäß einem zweiten Rekonstruktionsmodus durch den Punkt (P) verlaufend von einem Sender i zu einem Empfänger j der Menge von M*N Sender-Empfänger-Paaren mit einer Flugzeit eines Weges gemäß dem ersten Rekonstruktionsmodus von einem Sender i zu einem Empfänger j durch einen der Punkte der ausgewählten ersten Unter-Region verlaufend zusammenfällt.

10. Computerprogrammprodukt umfassend Code-Anweisungen zum Ausführen der Schritte des Verfahrens nach einem der Ansprüche 1 bis 8, wenn das Programm auf einem Computer ausgeführt wird.

**Claims**

1. Ultrasound imaging method for imaging a part (1), **characterised by** the implementation of the following steps:

- selecting a first sub-region ($\tilde{Z}$) of the part from a first image ($I^A(Z)$) of a region (Z) of the part (1),
- determining, for each point of the first selected sub-region ($\tilde{Z}$), the times of flight ($T_{ij}^A(\tilde{Z})$) corre-

sponding to the paths according to a first reconstruction mode (A) going through the point from a transmitter i to a receiver j for a set of M*N transmitter-receiver couples of an ultrasound signal;

- determining a second sub-region of the part, a point (P) of the region (Z) belonging to the second sub-region when a time of flight ($T_{ij}{}^B(P)$) of the path according to a second reconstruction mode (B) going through the point (P) from a transmitter i to a receiver j of said set of M*N transmitter-receiver couples coincides with a time of flight ($T^A(\bar{Z})$) of a path according to the first reconstruction mode from the transmitter i to the receiver j going through one of the points of the first selected sub-region.

2. Method according to claim 1, comprising a reconstruction of a second image ($I^B(Z)$) of the region of the part by a synthetic focusing according to the second reconstruction mode according to which, for each point (P) of the region, and for each transmitter-receiver i-j couple, one exploits an ultrasound signal $S_{ij}(t)$ considered at a time of flight ($T_{ij}{}^B(P)$) of the path according to the second reconstruction mode from the transmitter i to the receiver j while going through the point (P) of the region, uniquely if said time of flight according to the second reconstruction mode coincides with a time of flight of a path according to the first reconstruction mode from the transmitter i to the receiver j going through one of the points of the first selected sub-region.

3. Method according to claim 2, in which the reconstruction of the second image ($I^B(Z)$) comprises, for each point (P) of the region, the determination of a sum of amplitudes of acoustic signals limited to the acoustic signals received at a receiver j from a transmitter i when the time of flight of the path according to the second reconstruction mode from the transmitter i to the receiver j while going through the point (P) coincides with a time of flight of a path according to the first reconstruction mode from the transmitter i to the receiver j while going through one of the points of the first selected sub-region.

4. Method according to claim 1, comprising a reconstruction of a second image ($I^B(Z)$) of the region of the part by a synthetic focusing according to the second reconstruction mode according to which, for each point (P) of the region, and for each transmitter-receiver i-j couple, one exploits an ultrasound signal $S_{ij}(t)$ considered at a time of flight ($T_{ij}{}^B(P)$) of the path according to the second reconstruction mode from the transmitter i to the receiver j while going through the point of the region, uniquely if said time of flight according to the second reconstruction mode differs from the times of flight of the paths according to the first reconstruction mode from the transmitter i to the receiver j going through the points of the first selected sub-region.

5. Method according to claim 4, in which the reconstruction of the second image ($I^B(Z)$) comprises, for each point of the region, the determination of a sum of amplitudes of the acoustic signals limited to the acoustic signals received at a receiver j from a transmitter i when the time of flight of the path according to the second reconstruction mode from the transmitter i to the receiver j while going through the point does not coincide with one of the times of flight of the paths according to the first reconstruction mode from the transmitter i to the receiver j while going through the points of the first selected sub-region.

6. Method according to one of claims 1 to 5, in which a reconstruction mode is **characterised by** a type of route comprising several portions and a mode of propagation of the ultrasound signal on each portion of the route.

7. Method according to claim 6, in which the first reconstruction mode is a mode according to which each ultrasound signal follows a direct route with two portions, the mode of propagation of the signal being lateral on each of the portions.

8. Method according to claim 7, in which the second reconstruction mode is a mode according to which each ultrasound signal follows a direct route with two portions and the mode of propagation of the signal is different on each of the portions, or a mode according to which each ultrasound signal follows an indirect route with three portions at least.

9. Ultrasound imaging device for imaging a part (1) implementing a reconstruction by synthetic focusing, comprising M transmitters of an ultrasound signal in the part to be imaged (1) and N receivers of an ultrasound signal $S_{ij}(t)$ coming from the part to be imaged, the index i designating one of the transmitters, the index j designating one of the receivers, and t representing the time,
**characterised in that** it comprises processing means configured to:

    - select a first sub-region of the part from a first image of a region of the part (1),
    - determine, for each point of the first selected sub-region, times of flight corresponding to the path according to a first reconstruction mode going through the point from a transmitter i to a receiver j for a set of M*N transmitter-receiver couples of an ultrasound signal;
    - determine a second sub-region of the part, a point (P) of the region (Z) belonging to the second sub-region when a time of flight of the path according to a second reconstruction mode going through the point from (P) a transmitter i to a receiver j of said set of M*N transmitter-receiver couples coincides with a time of flight of a path according to the first reconstruction mode from the transmitter i to the receiver j going through one of the points of the first selected sub-region.

10. Computer program product comprising code instructions for the execution of the steps of the method according to any of claims 1 to 8 when said programme is run on a computer.

FIG. 1a

FIG. 1b

FIG. 1c

FIG. 2a

FIG. 2b

FIG. 3a

FIG. 3b

Mode A

Image $I^A(Z)$

FIG. 4a

Mode B

Image $I^B(Z)$

FIG. 4b

Mode LL

EE

ED

EF

EB

FIG. 5

FIG. 6a

FIG. 6b

FIG. 6c

FIG. 7a

FIG. 7b

FIG. 7c

FIG. 8a

FIG. 8b

FIG. 8c

FIG. 9a

FIG. 9b

FIG. 9c

FIG. 10a

FIG. 10b

FIG. 10c

FIG. 10d

EP 2 827 143 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. ROBERT.** *Méthodes ultrasonores de détection et d'imagerie temps-réel implémentées dans les systèmes d'acquisition M2M*